# EUROPEAN PATENT APPLICATION

(11) **EP 2 940 293 A1**
(43) Date of publication of application: **04.11.2015**
(21) Application number: 15165787.1
(22) Date of filing: 29.04.2015
(51) Int. Cl.: F03D 1/06

(54) **AERODYNAMIC DEVICE FOR A ROTOR BLADE OF A WIND TURBINE**

(30) Priority: 01.05.2014 US 201414266859
(71) Applicant: Siemens Energy, Inc., Orlando, FL 32826-2399 (US)
(72) Inventor: Enevoldsen, Peder Bay, 7100 Vejle (DK); Zamora Rodriguez, Alonso O., Broomfield, CO Colorado 80020 (US)
(74) Representative: Patentanwaltskanzlei WILHELM & BECK

(57) **Abstract**

The invention relates to an arrangement (40) comprising a rotor blade (20) of a wind turbine (10), an aerodynamic device (30) and connection means (41) for connecting the aerodynamic device (30) with a trailing edge section of the rotor blade (23). The aerodynamic device (30) comprises an airfoil profile with a pressure side (37), a suction side (38), a trailing edge section (34) and a leading edge section (36). The aerodynamic device (30) is separated from the rotor blade (20) by a slot (42) which is smaller than five centimeters.

## Description

Development for this invention was supported in part by Contract No. DE-EE0005493, awarded by the United States Department of Energy. Accordingly, the United States Government may have certain rights in this invention.

### Description

The present invention relates to an arrangement comprising a rotor blade of a wind turbine and an aerodynamic device. The aerodynamic device is connected with the rotor blade by connection means.

It is commonly known to upgrade rotor blades of a wind turbine by an aerodynamic device such as a flap, a panel or the like. On the one hand, such an aerodynamic device may increase the efficiency of the wind turbine. On the other hand, such an aerodynamic device may also serve the purpose of reducing noise which is generated by airflow flowing across the rotor blade.

Typically, the aerodynamic device increases the lift of the rotor blade, which in general is beneficial for the wind turbine. However, a drawback of the increase of the lift of the rotor blade is an increase of the limit of fatigue load of the wind turbine. This means that loads on components of the wind turbine may exceed the designed load limit of the respective components and a redesign of the component has to be considered. If redesign of the component is not an option, the application of the aerodynamic device to the rotor blade may limit the maximum wind speed and turbulence classes where the upgraded wind turbine with the modified rotor blade including the aerodynamic device can be certified and sold. More specifically, the described aerodynamic device typically modifies the dependence of the lift coefficient of the rotor blade with regard to the angle of attack of the rotor blade. The lift coefficient is typically depending on the angle of attack at which the airflow impinges on the leading edge section of the rotor blade. Exemplarily, the lift coefficient may increase for angles of attack ranging from -5 degrees with regard to the pressure side of the rotor blade, which is equivalent to 5 degrees on the suction side of the rotor blade, to 10 degrees on the pressure side of the rotor blade. This increase of the lift coefficient can be characterized and quantified by the slope of the lift coefficient with regard to the angle of attack.

A first group of conventional aerodynamic devices leads to an increase of the slope of the lift coefficient in the mentioned range of angles of attack (from 5 degrees on the suction side to 10 degrees on the pressure side). In other words, the additional lift generated by the aerodynamic device increases for increasing angles of attack.

In a second group of conventional aerodynamic devices, the slope of the lift coefficient with regard to the angles of attack remains unchanged by the introduction of the aerodynamic device. However, the lift coefficient as such is increased over the whole considered range of angles of attack. In other words, the aerodynamic device contributes to an equal increase of the lift over the whole considered range of angles of attack.

Both groups of conventional aerodynamic devices have the drawback that for high angles of attack where the overall load on the wind turbine is approaches the upper limit of an acceptable load on the wind turbine, the aerodynamic device even increases this overall load.

Various attempts have been made to provide an aerodynamic device which increases the lift for small angles of attack but only provides a small increase or no increase at all of the lift at high angles of attack. Known systems to reduce lift for high angles of attack include active systems containing for example a deformable trailing edge or a trailing edge flap. By activating the flap based on an input signal loads are reduced. The input signal can be a blade root bending moment, measurement of the local angle of attack, local lift values or similar parameters.

However, these active systems require a relatively complex technical implementation. Furthermore, these systems have to withstand harsh operating conditions over the life span of the rotor blade which easily exceeds 25 years. Otherwise, regular maintenance and servicing of these systems are required.

It is thus desired to provide means of an aerodynamic device for increasing the lift of a rotor blade which overcomes the drawbacks described above.

This objective is achieved by the independent claim. The dependent claims describe advantageous developments and modifications of the invention.

In accordance with the invention there is provided an arrangement comprising a rotor blade of a wind turbine, an aerodynamic device and connection means for connecting the aerodynamic device with the rotor blade. The rotor blade comprises an airfoil section with a rotor blade pressure side, rotor blade a suction side, a rotor blade trailing edge section and a rotor blade leading edge section. The aerodynamic device comprises an airfoil profile with a device pressure side, a device suction side, a device trailing edge section and a device leading edge section. The aerodynamic device is located in an area which is adjacent to the rotor blade suction side. The aerodynamic device is separated from the rotor blade by a slot. The slot has a slot width which is smaller than five centimeters.

The rotor blade may comprise a root section with a root. The root is arranged and prepared for being mounted to a hub of the wind turbine. Preferably, the root features a circular cross section.

Furthermore, the rotor blade comprises an airfoil section which is characterized by cross sections along a span of the rotor blade which show an airfoil profile.

An advantage of having an airfoil section with airfoil profiles is that the rotor blade is able to generate lift when an airflow flows along its surfaces.

The airfoil section may extend until a tip section of the rotor blade which is furthest away from the root section. The tip section comprises the tip of the rotor blade.

The section of the rotor blade between the root section and the airfoil section is referred to as a transition section of the rotor blade.

The section of the rotor blade that is adjacent to the tip section of the rotor blade is referred to as the outboard section of the rotor blade. The section of the rotor blade that is adjacent to the root section of the rotor blade is referred to as the inboard section of the rotor blade.

The airfoil section may be delimited by a shoulder of the rotor blade which is defined by the span-wise position of the maximum chord length of the rotor blade.

The span of the rotor blade is defined as a longitudinal axis of the rotor blade extending from the root section to the tip section.

The chord length is defined as the length of a chord line, whereby the chord line is perpendicular to the span and is a straight line between the rotor blade trailing edge and the rotor blade leading edge.

The rotor blade trailing edge is surrounded by the rotor blade trailing edge section and the rotor blade leading edge is surrounded by the rotor blade leading edge section.

The rotor blade leading edge and the rotor blade trailing edge divide the surface of the airfoil section of the rotor blade into a rotor blade pressure side and a rotor blade suction side.

Likewise, the area around the rotor blade is divided into one area that is adjacent to the rotor blade suction side and another area that is adjacent to the rotor blade pressure side. The aerodynamic device is located in the area that is adjacent to the rotor blade suction side.

The airfoil section advantageously comprises an airfoil profile which deviates from the circular profile of the root section in order to be able to generate lift. In particular, it may comprise a cambered or asymmetric shape with regard to the chord line.

The aerodynamic device is advantageously connected to the rotor blade trailing edge section.

The aerodynamic device may be connected to the airfoil section and/or to the transition region and/or even to the root section.

The aerodynamic device may be connected to the outboard section of the rotor blade and/or to the inboard section of the rotor blade.

The aerodynamic device itself also comprises an airfoil profile with a profile that deviates from a circular shape. Thus, also the aerodynamic device is able to generate lift when airflow is flowing across its surface.

The slot that separates the aerodynamic device from the rotor blade is also referred to as a gap or a slit.

The slot comprises a slot width that is smaller than five centimeters. In particular, the slot width is smaller than two centimeters. It may even be advantageous that the slot width is smaller than one centimeter.

If the aerodynamic device is placed in the outboard section of the rotor blade, a maximum slot width of two centimeters may be preferable.

If the aerodynamic device is placed in the inboard section of the rotor blade, a larger slot width may be preferable due to a typically larger thickness of the boundary layer.

The slot can be characterized by its minimum distance to the surface of the rotor blade. Note that in principle the aerodynamic device can be arranged with regard to the rotor blade trailing edge section such that it extends well behind the trailing edge of the rotor blade, as regarded in the direction of the airflow. Nevertheless, the slot width is defined as the minimum distance from a point on the surface of the aerodynamic device and its closest counterpart point on the surface of the rotor blade.

The slot width is advantageously chosen to be relatively small. It has been found that it is beneficial to place the aerodynamic device at least partly within the boundary layer of the rotor blade.

In terms of chord length of the rotor blade, the slot width is advantageously smaller than 2% of the chord length of the rotor blade.

A key aspect of the present invention is that the slot width is chosen such that for a thin boundary layer, the additional lift that is generated by the aerodynamic device is large, while for a comparably thick boundary layer, the additional lift that is generated by the aerodynamic device is small. As a thin boundary layer is typically associated with a small angle of attack and a small loading of the rotor blade, a large increase of the lift is desirable. In contrast, as a thick boundary layer is typically associated with a large angle of attack a large loading of the rotor blade, a reduced increase of the lift which results in a reduced further increase of the load of the rotor blade is desirable, too. Note that in principle also the generation of no additional lift or even the generation of a negative lift is possible.

The boundary layer is referred to as the layer of the airflow in the immediate vicinity of the bounding surface of the rotor blade. The boundary layer is an intermediate region between the surface of the rotor blade where the velocity of the airflow approaches zero and a region spaced apart from the surface of the rotor blade where the velocity of the airflow approaches the velocity of a free, unhindered airflow. In other words, the boundary layer can be described as a layer where the velocity of the airflow varies. The thickness of the boundary layer is defined as the distance away from the surface of the rotor blade where the viscous airflow velocity is 99% of the free stream velocity of the airflow.

Typical values of the thickness of the boundary layer are between 0.5% of the chord length of the rotor blade and 5% of the chord length of the rotor blade for operational angles of attack of the rotor blade.

As an example, at low or small angles of attack the boundary layer at the trailing edge section is thin, and may be in the range of 1 to 6 millimeters. At higher angles of attack the boundary layer of the trailing edge section becomes thicker and may be in the range of 6 to 12 millimeters.

Thus, advantageously, the aerodynamic device is at least partly within the boundary layer of the rotor blade trailing edge section.

In other words, the aerodynamic device is at least partly covered by the boundary layer of the rotor blade trailing edge section.

In yet other words, the aerodynamic device is at least partly submerged within the boundary layer of the rotor blade trailing edge section.

The advantage of placing the aerodynamic device at least partly within the boundary layer is that by using a varying local velocity of the airflow the impact or influence of the aerodynamic device on the total lift of the arrangement differs depending on the thickness of the boundary layer.

In other words, if the boundary layer is thin a relatively high velocity of the airflow flows across the aerodynamic device. Thus, a high lift is generated. If, however, a high angle of attack of the rotor blade leads to a thick boundary layer, then a relatively small velocity of the airflow flows along the aerodynamic device leading to a reduced effectiveness of the aerodynamic device and thus to a reduced lift produced by the aerodynamic device.

Descriptively speaking, the aerodynamic device becomes less visible at high angles of attack. Thus, automatically, at high angles of attack of the rotor blade when the loading of the wind turbine is high, the aerodynamic device does not further increase the load of the wind turbine. By this, a self regulating mechanism to adjust the lift coefficient of the rotor blade is established.

In an advantageous embodiment, the aerodynamic device is tilted with regard to the rotor blade such that the angle of attack of the aerodynamic device is greater than three degrees, in particular greater than five degrees.

The aerodynamic device is tilted, in other words inclined, with regard to the rotor blade which results in an angle of attack of the aerodynamic device which is greater than three degrees, in particular greater than five degrees. In other words, a chord line of the aerodynamic device is not in parallel with the direction of the airflow in this region of the rotor blade.

An advantage of the inclined or tilted aerodynamic device is that the generation of lift due to the aerodynamic device is increased, compared to an un-tilted aerodynamic device.

Furthermore, varying local wind speeds can advantageously be used by the aerodynamic device.

In another advantageous embodiment, at least for angles of attack of the rotor blade between five degrees and ten degrees, the aerodynamic device is completely within the boundary layer of the rotor blade trailing edge section.

To optimize the selective behavior of the aerodynamic device with regard to small angles of attack compared to high angles of attack, it is advantageous if the boundary layer completely covers the aerodynamic device. This may be difficult to achieve for all possible angles of attack of the rotor blade. It is, however, beneficial if for the relevant angles of attack, which are between 5 degrees and 10 degrees for a typical rotor blade of a wind turbine, the requirement of a full coverage of the aerodynamic device by the boundary layer is fulfilled.

Exemplarily, the aerodynamic device is deemed to be completely within the boundary layer if its maximum extension away from the surface of the rotor blade is smaller than 5 millimeters. However, the concrete value of the limit of the maximum extension of the aerodynamic device depends on the specific design of the rotor blade as the concrete thickness of the boundary layer depends on the specific design of the rotor blade.

In another advantageous embodiment, the maximum thickness of the aerodynamic device is greater than 10% of the chord length of the aerodynamic device.

The thickness of the aerodynamic device is defined by the shortest distance between the device pressure side and the device suction side, determined perpendicular to the chord of the aerodynamic device. The maximum thickness refers to the chord-wise thickness of the aerodynamic device exhibiting a maximum value. For a typical aerodynamic device the maximum thickness is - chord-wise - in the first third with regard to the device leading edge.

It is advantageous that the aerodynamic device comprises a maximum thickness greater than 10% of the chord length as thus a sufficiently large lift can be generated by the aerodynamic device.

In another advantageous embodiment, the maximum thickness of the aerodynamic device is between 10% of the chord length of the aerodynamic device and 30% of the chord length of the aerodynamic device. In particular, the maximum thickness of the aerodynamic device is between 12% of the chord length of the aerodynamic device and 24% of the chord length of the aerodynamic device.

The given values for the maximum thickness of the aerodynamic device have been found to be a good compromise between the lift that can be generated by the aerodynamic device and the weight and drag that is caused by the aerodynamic device.

In another advantageous embodiment, the airfoil profile is a cambered airfoil profile. Thus, the chord line of the aerodynamic device at least partly differs from a mean camber line of the aerodynamic device.

In other words, advantageously, the airfoil profile of the aerodynamic device is asymmetric with regard to the chord line of the aerodynamic device. A cambered airfoil profile has the advantage of a potentially improved lift that can be achieved by the aerodynamic device.

The mean camber line of the aerodynamic device is defined by a virtual line along the chord line, i.e. between the leading edge of the aerodynamic device and the trailing edge of the aerodynamic device, wherein this virtual line has an equal distance to both the pressure side of the aerodynamic device and the suction side of the aerodynamic device. The maximum distance between the mean camber line and the chord line may be regarded as a measurement or degree of asymmetry or camber of the aerodynamic device.

In another advantageous embodiment, vortex generators are mounted on the device suction side for increasing the lift of the arrangement.

Vortex generators are well known means for further enhancement of the lift potential of an airfoil. As the aerodynamic device comprises the shape of an airfoil, vortex generators being mounted on the suction side of the aerodynamic device have the potential for further increase of the lift of the aerodynamic device and thus for an increase of the lift of the arrangement as well.

It has to be noted that the size of the vortex generators has to be adapted to the overall size of the aerodynamic device; the vortex generators can thus also be referred to as mini vortex generators in comparison to conventional vortex generators placed on the rotor blade suction side of a wind turbine.

In another advantageous embodiment, the device trailing edge section and/or the device leading edge section comprise serrations for reducing noise emission and/or increasing the lift of the arrangement.

Serrations in the trailing edge section or the leading edge section of an airfoil is a well known means for noise reduction or increase of the lift, i.e. increasing the efficiency, of an airfoil. It is thus advantageous to also equip the aerodynamic device with serrations at the trailing edge section and/or the leading edge section.

In another advantageous embodiment, at least in the range of angles of attack of the rotor blades for which the lift of the arrangement increases, the increase of the lift is reduced due to the aerodynamic device, compared to the increase of the lift of the rotor blade in the same range of angles of attack.

Depending on the specific design of the rotor blade, the lift coefficient increases in a certain range of angles of attack of the rotor blade. Exemplarily, this may be in the range of -5 degrees to +15 degrees. Note that, in this example, for angles of attack above 15 degrees stall is induced, thus resulting in a sharp decrease of the lift coefficient.

An effect of the aerodynamic device is advantageously that the slope of the lift coefficient for the relevant angles of attack of the rotor blade is reduced compared to a rotor blade without an aerodynamic device. If this is achieved, a considerable advantage by the use of the aerodynamic device is achieved as the lift of the arrangement is increased for small angles of attack but the additional increase in lift generated by the aerodynamic device is small or even not existing for high angles of attack where the wind turbine already experiences a high loading. Thus, fatigue limits of the various components of the wind turbine can be designed in an advantageous way.

In another advantageous embodiment, the connections means are shaped as struts.

In principle, the connection means may have any shape suitable to provide a stable and durable connection between the aerodynamic device and the rotor blade. However, it is advantageous if the impact of the connection means with regard to the airflow flowing from the rotor blade leading edge section to the rotor blade trailing edge section is obstructed the least possible. Thus, connection means shaped as fine and discrete beams or columns or struts are beneficial. In general, it is advantageous to design the connection means such that they aerodynamically interfere as little as possible with the airflow.

In another advantageous embodiment, the chord length of the aerodynamic device is in the range between 1% and 15% of the chord length of the rotor blade, both chord lengths being determined at the same span-wise position of the rotor blade.

In accordance with conventional aerodynamic devices such as Gurney flaps, serrated panels or the like it is beneficial to design them in a shape and size that is small compared to the rotor blade as a whole. It has been found out that the mentioned range of the chord length of the aerodynamic device represents a favorable compromise between weight and drag of the aerodynamic device and its impact on the lift of the arrangement.

In another advantageous embodiment, the chord line of the aerodynamic device comprises an angle between -25 degrees and +25 degrees with regard to the chord line of the rotor blade. Both chord lines are determined at the same span-wise position of the rotor blade.

In other words, the chord line of the aerodynamic device is inclined or tilted in a range of +-25 degrees with regard to the chord line of the rotor blade. Thus, an advantageous additional lift of the arrangement in particular for small angles of attack of the rotor blade can be achieved.

Embodiments of the invention are now described, by way of example only, with reference to the accompanying drawings, of which:
- Figure 1: shows a wind turbine;
- Figure 2: shows an arrangement comprising a rotor blade of a wind turbine, an aerodynamic device and connection means for connecting the aerodynamic device and the rotor blade;
- Figure 3: shows a detailed view of the aerodynamic device and a rotor blade trailing edge section;
- Figure 4: shows the angle between an airflow and the chord line of an aerodynamic device;
- Figure 5: shows an arrangement with an aerodynamic device arranged in proximity to a trailing edge section of a rotor blade and a velocity profile of high angles of attack of the rotor blade;
- Figure 6: shows the same arrangement as in Figure 5 with small angles of attack;
- Figure 7: shows an aerodynamic device with vortex generators on its suction side; and
- Figure 8: shows an aerodynamic device with serrations at its trailing edge section and its leading edge section.

The illustration in the drawings is in schematic form. It is noted that in different figures, similar or identical elements may be provided with the same reference signs.

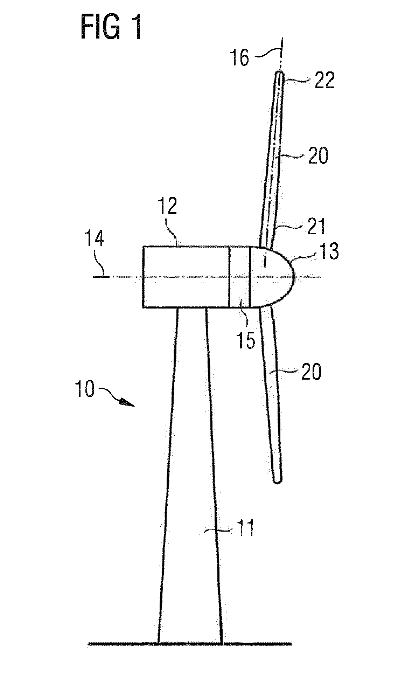

In Figure 1, a wind turbine 10 is shown. The wind turbine 10 comprises a nacelle 12 and a tower 11. The nacelle 12 is mounted at the top of the tower 11. The nacelle 12 is mounted rotatable with regard to the tower 11 by means of a yaw bearing. The axis of rotation of the nacelle 12 with regard to the tower 11 is referred to as the yaw axis.

The wind turbine 10 also comprises a hub 13 with three rotor blades 20 (of which two rotor blades 20 are depicted in Figure 1). The hub 13 is mounted rotatable with regard to the nacelle 12 by means of a main bearing. The hub 13 is mounted rotatable about a rotor axis of rotation 14.

The wind turbine 10 furthermore comprises a main shaft, which connects the hub 13 with a rotor of a generator 15. The hub 13 is connected directly to the rotor, thus the wind turbine 10 is referred to as a gearless, direct driven wind turbine. As an alternative, the hub 13 may also be connected to the rotor via a gearbox. This type of wind turbine is referred to as a geared wind turbine.

The generator 15 is accommodated within the nacelle 12. It comprises the rotor and a stator. The generator 15 is arranged and prepared for converting the rotational energy from the rotor into electrical energy.

The rotor blades 20 are mounted rotatable about a pitch axis 16 with regard to the hub 13 by means of a pitch bearing. The rotor blades 20 may thus be pitched in order to optimize their orientation with regard to an airflow impinging on the wind turbine 10.

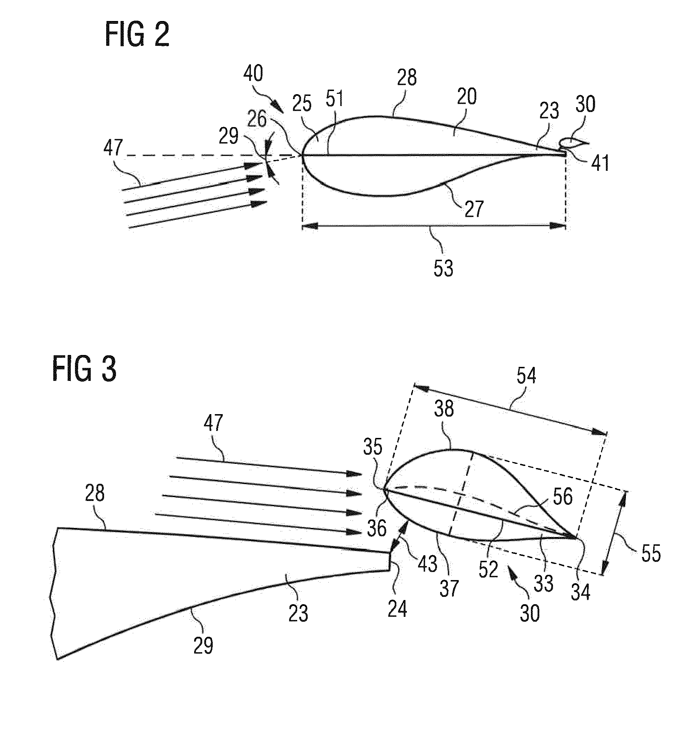

Figure 2 shows an arrangement 40 comprising a rotor blade 20 of a wind turbine and an aerodynamic device 30. The aerodynamic device 30 is connected via connection means 41 to a rotor blade trailing edge section 23. The rotor blade 20 also comprises a rotor blade leading edge section 25 with a rotor blade leading edge 26. The rotor blade leading edge 26 and a rotor blade trailing edge are connected by a virtual straight line which is referred to as a chord line of the rotor blade 51. The length of the chord line 51 is referred to as the chord length of the rotor blade 53.

The rotor blade 20 furthermore comprises a rotor blade suction side 28, also denoted as the upper surface of the rotor blade, and a rotor blade pressure side 27, also denoted as a lower side of the rotor blade 20.

Figure 2 also shows an airflow 47 impinging on the arrangement 40. The direction of the airflow 47 comprises an angle 51 with the chord line of the rotor blade which is denoted as the angle of attack of the rotor blade 29. If the airflow 47 impinges on the rotor blade 20 from a direction of the rotor blade pressure side 27, angles of attack of the rotor blade 29 are calculated positively, if the airflow 47 impinges on the rotor blade 20 from upside, i.e. from the direction of the rotor blade suction side 28, then the angle of attack of the rotor blade 29 is calculated or given as negative values.

In Figure 3, a rotor blade trailing edge section 23 is shown together with an aerodynamic device 30 arranged close to the rotor blade trailing edge 24. For sake of clarity, connection means for connecting the aerodynamic device 30 and the rotor blade trailing edge section 23 are omitted.

The rotor blade trailing edge section 23 comprises a rotor blade suction side 28 and a rotor blade pressure side 29. The shortest distance between the rotor blade and the aerodynamic device 30 determines a slot width 43 of the slot between the aerodynamic device 30 and the rotor blade.

The aerodynamic device 30 comprises an airfoil profile, as can be seen in the cross sectional view of Figure 3. More specifically, the aerodynamic device 30 comprises a device suction side 38, a device pressure side 37, a device leading edge 35, surrounded by a device leading edge section 36 and a device trailing edge 34, surrounded by a device trailing edge section 33. The straight line which connects the device leading edge 35 and the device trailing edge 34 is denoted as the chord line of the aerodynamic device 52. Furthermore, a mean camber line of the aerodynamic device 56 is defined by an equal distance to both the device suction side 38 and the device pressure side 37 at each chord-wise position of the aerodynamic device 30. The length of the chord line of the aerodynamic device 52 is referred to as the chord length of the aerodynamic device 54; the maximum distance between the device suction side 38 and the device pressure side 37 is referred to as the maximum thickness of the aerodynamic device 55. Note that the distance between device suction side 38 and device pressure side 37 has to be taken by a virtual line which is perpendicular to the chord line of the aerodynamic device 52.

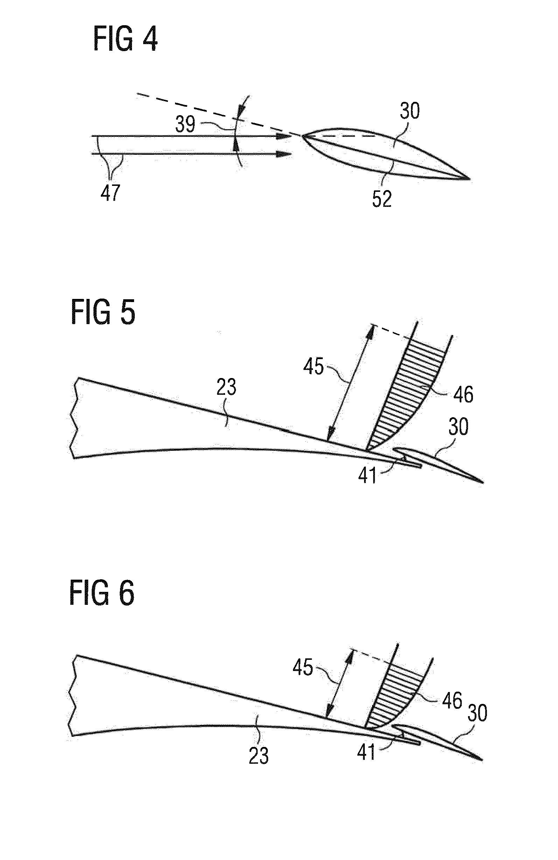

Figure 4 specifically illustrates the angle of attack of the aerodynamic device 39. The angle of attack of the aerodynamic device 39 is defined by the angle between the airflow 47, which is understood as the free stream airflow at the rotor blade trailing edge section 23, in particular at the rotor blade suction side 28 of the rotor blade trailing edge section 23, with regard to the chord line of the aerodynamic device 52.

In Figures 5 and 6 a rotor blade trailing edge section 23 and an aerodynamic device 30 are illustrated. Connection means 41 which connect the aerodynamic device 30 with the rotor blade trailing edge section 23 are illustrated. It can be seen that the aerodynamic device 30 is spaced apart from the rotor blade trailing edge section 23 by a slot.

Figures 5 and 6 furthermore illustrate a velocity profile 46 of an airflow as it is the case just upstream of the aerodynamic device 30. While Figure 6 shows a small angle of attack of the rotor blade, resulting in a relatively small thickness of the boundary layer 45, Figure 5 shows a high angle of attack of the rotor blade, resulting in a relatively thick boundary layer, i.e. a relatively large thickness of the boundary layer 45.

In other words, while the velocity of the airflow reaches its constant and stable value relatively quickly in the case of small angles of attack of the rotor blade, the local velocity of the wind flow is relatively small at the region of the aerodynamic device 30 for the case of high angles of attack of the rotor blade. This results in the consequence that for small angles of attack the aerodynamic device 30 is efficient and produces a significant additional lift to the rotor blade, while for high angles of attack the effect of the aerodynamic device 30 is relatively small and may even be regarded as invisible for the airflow flowing from the rotor blade leading edge section to the rotor blade trailing edge section 23.

This has the advantage that the effectiveness of the aerodynamic device for increasing the lift of an arrangement comprising the aerodynamic device and the rotor blade selectively depends on the thickness of the boundary layer 45, thus selectively depending on the angle of attack of the rotor blade, thus selectively depending on the loading of the rotor blade. No active regulation mechanism is necessary.

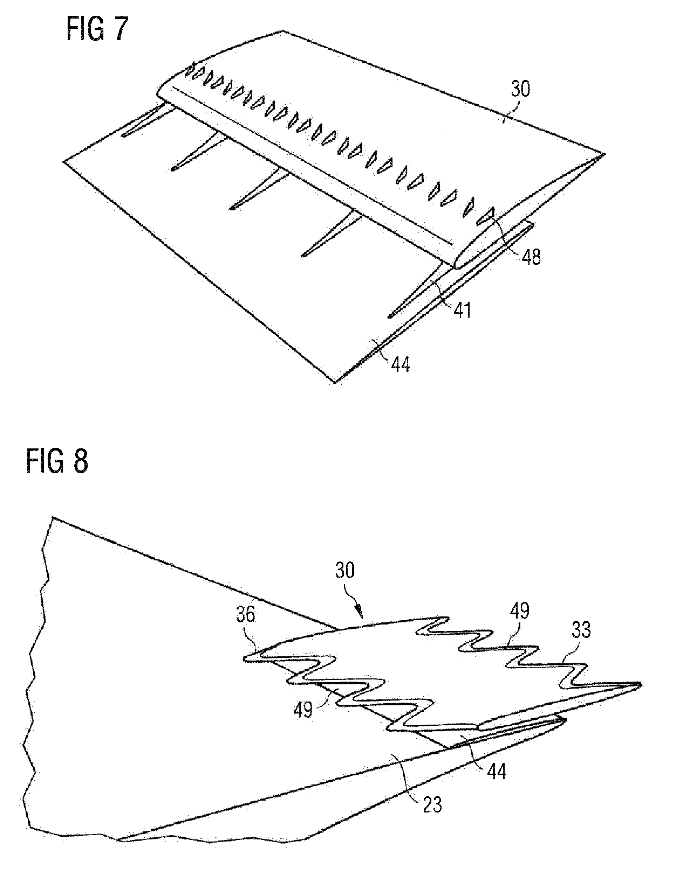

Figure 7 shows a specific embodiment of an aerodynamic device 30. The aerodynamic device 30 comprises a plurality of pair-wisely arranged vortex generators 48. Note that the size of the vortex generators 48 as shown in Figure 7 is small compared to conventional vortex generators placed on a suction side of a conventional rotor blade of a wind turbine.

Figure 7 also shows that the aerodynamic device 30 is attached to an attachment plate 44 by connection means 41. This has the advantage that the aerodynamic device 30 is not directly connected with the surface of a rotor blade but the attachment plate 44 is connected with the surface of the rotor blade. This gives an advantage for manufacturing and mounting the aerodynamic device at a rotor blade trailing edge section. This is particularly valuable if the aerodynamic device 30 is mounted to an existing rotor blade of a wind turbine as a retrofit or upgrade kit.

Finally, Figure 8 shows another embodiment of an aerodynamic device 30 comprising serrations 49 at a device leading edge section 36 and at a device trailing edge section 33. Again, the aerodynamic device 30 is connected via connection means to an attachment plate 44. The attachment plate 44 is attached to a rotor blade trailing edge section 23. The serrations 49 of the aerodynamic device 30 have the advantage of a reduction of noise emission as well as a further increase of the lift.

## Claims

1. Arrangement (40) comprising a rotor blade (20) of a wind turbine (10), an aerodynamic device (30) and connection means (41) for connecting the aerodynamic device (30) with the rotor blade (23), wherein
- the rotor blade (20) comprises an airfoil profile with a rotor blade pressure side (27), a rotor blade suction side (28), a rotor blade trailing edge section (23) and a rotor blade leading edge section (25),
- the aerodynamic device (30) comprises an airfoil profile with a device pressure side (37), a device suction side (38), a device trailing edge section (33) and a device leading edge section (36),
- the aerodynamic device (30) is located in an area which is adjacent to the rotor blade suction side (28),
- the aerodynamic device (30) is separated from the rotor blade (20) by a slot (42), and
- the slot (42) has a slot width (43) which is smaller than five centimeters.

2. Arrangement (40) according to claim 1, wherein the aerodynamic device (30) is connected to the rotor blade (20) by the connection means (41) at the rotor blade trailing edge section (23).

3. Arrangement (40) according to claim 1, wherein the aerodynamic device (30) is tilted with regard to the rotor blade (20) such that the angle of attack of the aerodynamic device (39) is greater than three degrees.

4. Arrangement (40) according to claim 1, wherein at least for angles of attack of the rotor blade (29) between five degrees and ten degrees, the aerodynamic device (30) is completely within the boundary layer of the rotor blade trailing edge section (23).

5. Arrangement (40) according to claim 1, wherein the maximum thickness of the aerodynamic device (55) is greater than 10% of the chord length of the aerodynamic device (54).

6. Arrangement (40) according to claim 1, wherein the maximum thickness of the aerodynamic device (55) is between 10% of the chord length of the aerodynamic device (54) and 30% of the chord length of the aerodynamic device (54).

7. Arrangement (40) according to claim 1, wherein the airfoil profile is a cambered airfoil profile, thus the chord line of the aerodynamic device (52) at least partly differs from a mean camber line of the aerodynamic device (56).

8. Arrangement (40) according to claim 1, wherein vortex generators (48) are mounted on the device suction side (38) for increasing the lift of the arrangement (40).

9. Arrangement (40) according to claim 1, wherein the device trailing edge section (33) and/or the device leading edge section (36) comprises serrations for reducing noise emission and/or increasing the lift of the arrangement (40).

10. Arrangement (40) according to claim 1, wherein at least in the range of angles of attack of the rotor blade (29) for which the lift of the arrangement (40) increases, the increase of the lift of the arrangement (40) is reduced due to the aerodynamic device (30), compared to the increase of the lift of the rotor blade (20) in the same range of angles of attack of the rotor blade (29).

11. Arrangement (40) according to claim 1, wherein the connection means (41) are shaped as struts.

12. Arrangement (40) according to claim 1, wherein the chord length of the aerodynamic device (52) is in the range between 1% and 15% of the chord length of the rotor blade (53), both chord lengths being determined at the same span-wise position of the rotor blade (20).

13. Arrangement (40) according to claim 1, wherein the chord line of the aerodynamic device (52) comprises an angle between -25 degrees and +25 degrees with regard to the chord line of the rotor blade (51), both chord lines being determined at the same span-wise position of the rotor blade (20).

14. Arrangement (40) according to claim 3, wherein the aerodynamic device (30) is tilted with regard to the rotor blade (20) such that the angle of attack of the aerodynamic device (39) is greater than five degrees.

15. Arrangement (40) according to claim 6, wherein the maximum thickness of the aerodynamic device (55) is between 12% of the chord length of the aerodynamic device (54) and 24% of the chord length of the aerodynamic device (54).
